# EUROPÄISCHE PATENTSCHRIFT

(11) **EP 0 989 081 B1**
(45) Veröffentlichungstag und Bekanntmachung des Hinweises auf die Patenterteilung: **09.10.2002**
(21) Anmeldenummer: 99250299.7
(22) Anmeldetag: 31.08.1999
(51) Int. Cl.: B65G 57/18, B65G 57/10

(54) **Vorrichtung zur Überwachung der Befüllung von Sammelmulden mit konstanter Muldenbreite**
Device for monitoring the filling of a holdall having constant width
Dispositif pour surveiller le remplissage d'un collecteur à largeur constante

(30) Priorität: 23.09.1998 DE 19845828
(43) Veröffentlichungstag der Anmeldung: 29.03.2000
(73) Patentinhaber: V & M Deutschland GmbH, 40472 Düsseldorf (DE)
(72) Erfinder: Bönig, Albert, 45470 Mülheim (DE); Klemme, Wolfgang, 47053 Duisburg (DE); Pieters, Rolf, 45473 Mülheim (DE)
(74) Vertreter: Meissner, Peter E., Dipl.-Ing.

(56) Entgegenhaltungen:
- EP-A- 0 850 863
- DE-A- 3 840 803
- DE-A- 19 519 615
- DE-B- 2 634 629
- US-A- 4 732 522

## Beschreibung

Die Erfindung betrifft eine Vorrichtung zur Überwachung der Befüllung von Sammelmulden mit konstanter Muldenbreite, bei denen langgestrecktes rollfähiges Gut, insbesondere Stangen oder Rohre in übereinandergeschichteten Lagen lärmarm gesammelt wird gemäß dem Oberbegriff des Patentanspruches 1.

Eine gattungsgemäße Sammelmulde ist der DE-PS 38 40 803 zu entnehmen. Sie besteht im wesentlichen aus einer vertikal verstellbaren Unterlage, welche beim Zuladen jeder weiteren Lage um die vertikale Lagenhöhe absenkbar ist. Auf der der Zulaufseite gegenüberliegenden Seite ist ein über der Unterlage vorstehender Anschlag angeordnet. Mehrere im Abstand voneinander fluchtend angeordnete Unterlagen bilden zusammen eine Mulde, wobei die Unterlage entsprechend dem Rollwiderstand des Gutes in Quertransportrichtung auf eine bestimmte Neigung einstellbar ist. Um das lärmarme Darüberhinwegrollen zu ermöglichen, schließt die Längsachse der Mulde mit der Achse einer längs zur Unterlage verlaufenden Zufuhreinrichtung einen spitzen Winkel ein. Vergleichbare Konstruktionen sind aus der DE-AS 26 34 629 und der DD-OS 219745 bekannt.

Aus der DE-OS 21 29 787 ist eine Vorrichtung zum Stapeln von länglichen Gegenständen, wie Stangen, bekannt, bei der zur Ausrichtung ein Anschlag für die Sirnseiten der Gegenstände vorgesehen ist.

Die störungsfreie und ordnungsgemäße Befüllung der Sammelmulde ist kein Problem für den Fall, daß nur eine Standardabmessung gesammelt wird und die Muldenbreite ein Vielfaches des Durchmessers beträgt. Eine andere Lösungsmöglichkeit besteht darin, die Muldenbreite dem sich verändernden Durchmesser des zu sammelnden Gutes anzupassen (DE-AS 2634629), so daß die zuvor genannte Bedingung immer erfüllt ist. Eine solche Verschiebemöglichkeit des Anschlages verteuert aber die Gesamtanlage ganz erheblich.

Bei Sammelmulden mit konstanter Muldenbreite können hin und wieder Befüllungsprobleme in der Art auftreten, daß im Zulaufbereich Störungen auftreten und die Mulde nicht voll gefüllt ist. Dies führt dazu, daß eine Lage zu wenige rollfähige Stücke aufweist und bei vorzeitiger Absenkung die nächsten rollfähigen Stücke vom Zulaufrost herunterfallen und ein Darüberhinwegrollen nicht mehr oder nur unvollkommen stattfindet.

Aufgabe der Erfindung ist es, eine Vorrichtung zur Überwachung der Befüllung von Sammelmulden mit konstanter Muldenbreite anzugeben, die eine störungsfreie und ordnungsgemäße Befüllung für unterschiedliche Durchmesser des zu sammelnden Gutes ohne zusätzliches Überwachungspersonal sicherstellt.

Diese Aufgabe wird ausgehend vom Oberbegriff in Verbindung mit den kennzeichnenden Merkmalen des Patentanspruches 1 gelöst. Vorteilhafte Weiterbildungen sind Bestandteile von Unteransprüchen.

Die erfindungsgemäße Vorrichtung arbeitet in der Weise, daß zeitverzögert im Takt des Zulaufes der Antrieb eines Zylinders bewegt und damit eine Fühlerplatte nach vorn geschoben wird. Solange an der Zulaufseite der Mulde kein zu sammelndes Gut liegt, kann die Fühlerplatte über die Bündiglinie hinweg verschoben werden. Nach einem vorher festgelegten Verschiebeweg X erfolgt die Umkehrung und die Fühlerplatte wird wieder zurückgefahren. Diese Abfolge wird mit jedem weiteren zulaufenden Stück wiederholt. Sobald eine Lage fast voll ist, kommt die Stirnseite des nächsten zugerollten Stückes im Bereich der Fühlerplatte zu liegen. Die Fühlerplatte wird wieder nach vorn bewegt, kann aber über die Bündiglinie hinweg nicht verschoben werden, da die Stirnseite des letzten Stückes einen Anschlag für die Fühlerplatte bildet. Dieser Widerstand löst einen Kontakt aus und die Unterlage wird abgesenkt. Die Absenkung der Unterlage erfolgt nun solange, bis die Unterkante der Fühlerplatte frei kommt und die Fühlerplatte weiter nach vorn geschoben werden kann. Die Unterlage kommt zum Stehen und die Befüllung der Mulde mit der nächsten Lage kann beginnen. Um die Reibung des an der Fühlerplatte anliegenden Gutes beim Absenken der Unterlage zu verringern, weist die Fühlerplatte in Richtung des Hebens und Senkens - also oben und unten - eine Abschrägung auf.

Damit die Fühlerplatte zum einen mit Sicherheit einen wesentlichen Teil der Stirnseite des letzten Stückes der Lage und zum anderen nicht schon das zuvor zugerollte Stück erfaßt, wird weiterbildend vorgeschlagen, die Fühlerplatte mitsamt dem Zylinder querverschieblich zur Muldenlängsachse anzuordnen. Als Hilfestellung kann auf einer Skala die üblichen Abmessungen des zu sammelnden Gutes aufgetragen und mittels einer Spindel die Querverschiebung eingestellt werden.

Der Vorteil der Vorrichtung ist darin zu sehen, daß auch bei konstanter Muldenbreite das Sammeln von rollfähigem Gut mit unterschiedlichem Durchmesser ohne zusätzliches Überwachungspersonal kontrolliert werden kann und die Vorrichtung in einfacher Weise an unterschiedliche Durchmesser anpaßbar ist. Außerdem ist die Vorrichtung kostengünstiger als eine entsprechende aufwendige elektronische Überwachung. Erfolgt das Sammeln in einem rauhen Walzwerksbetrieb, dann ist erfahrungsgemäß eine elektronische Überwachung in vielen Fällen auch stark störanfällig.

In der Zeichnung wird die erfindungsgemäße Vorrichtung näher erläutert. Es zeigen:
- Figur 1: in einer Draufsicht die Gesamtanlage einschließlich der erfindungsgemäßen Vorrichtung
- Figur 2: in einem vergrößerten Maßstab eine Ansicht in Richtung X in Fig. 1
- Figur 3: eine Ansicht in Richtung Y in Fig. 2
- Figur 4: eine Ansicht in Richtung Z in Fig. 2

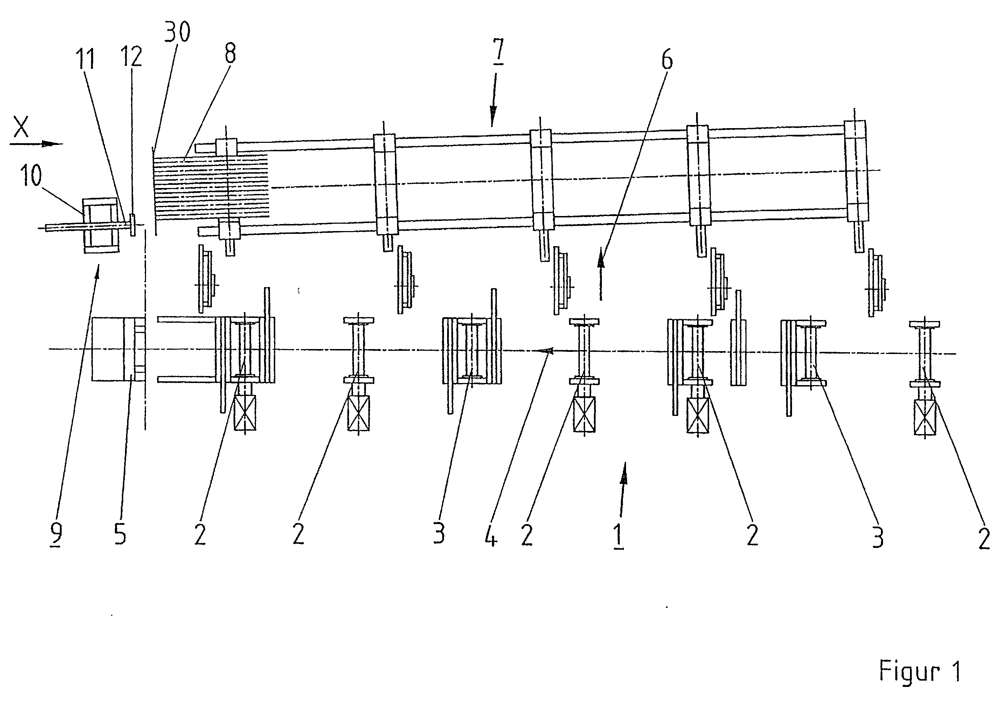

Figur 1 zeigt in einer Draufsicht die Gesamtanlage einschließlich der erfindungsgemäßen Vorrichtung. Über einen Rollgang 1 mit angetriebenen Rollen 2 und nicht angetriebenen Rollen 3 wird hier nicht dargestelltes langgestrecktes rollfähiges Gut, z. B. Rohre, in Pfeilrichtung 4 transportiert. Hat das Gut den Endanschlag 5 erreicht, wird es gemäß dem Pfeil 6 in Querrichtung zu der hier nur skizziert dargestellten Sammelmulde 7 bewegt. Der Endbereich einer Lage 8 des gesammelten Gutes ist hier angedeutet.

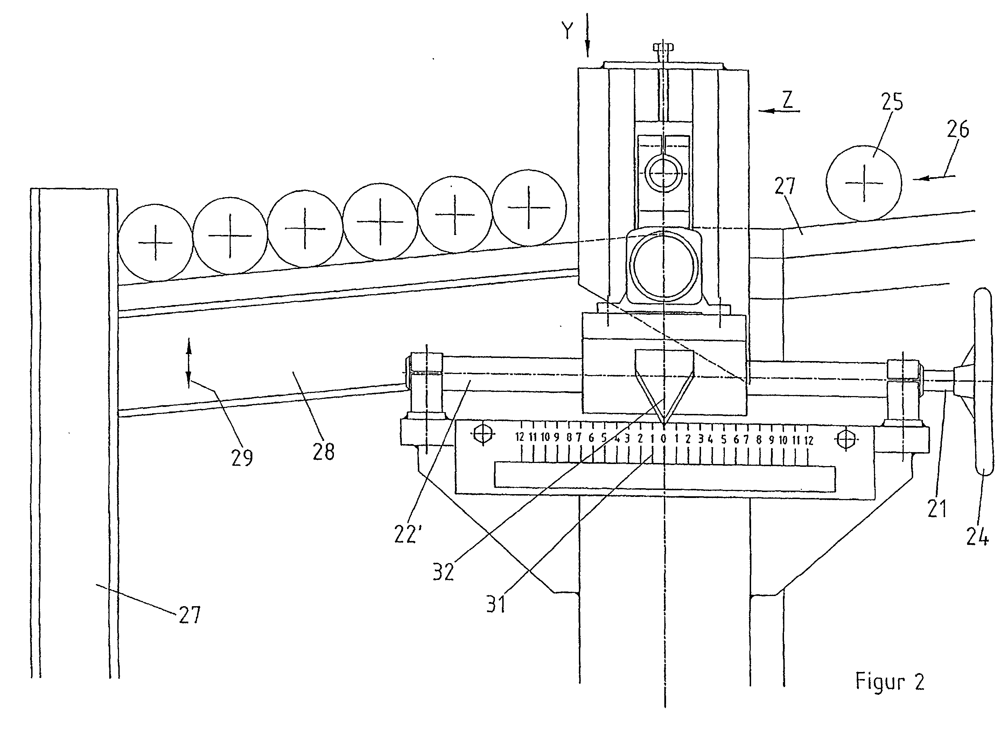

Zu erkennen in dieser Darstellung ist auch die erfindungsgemäße Vorrichtung 9, die in den nachfolgenden Figuren 2 - 4 näher erläutert wird. Hauptbestandteile der Vorrichtung sind ein Rahmengestell 10 und eine auf dieser in Längsrichtung der Sammelmulde 7 verschiebbare Stange 11, an deren vorderem Ende eine Fühlerplatte 12 befestigt ist.

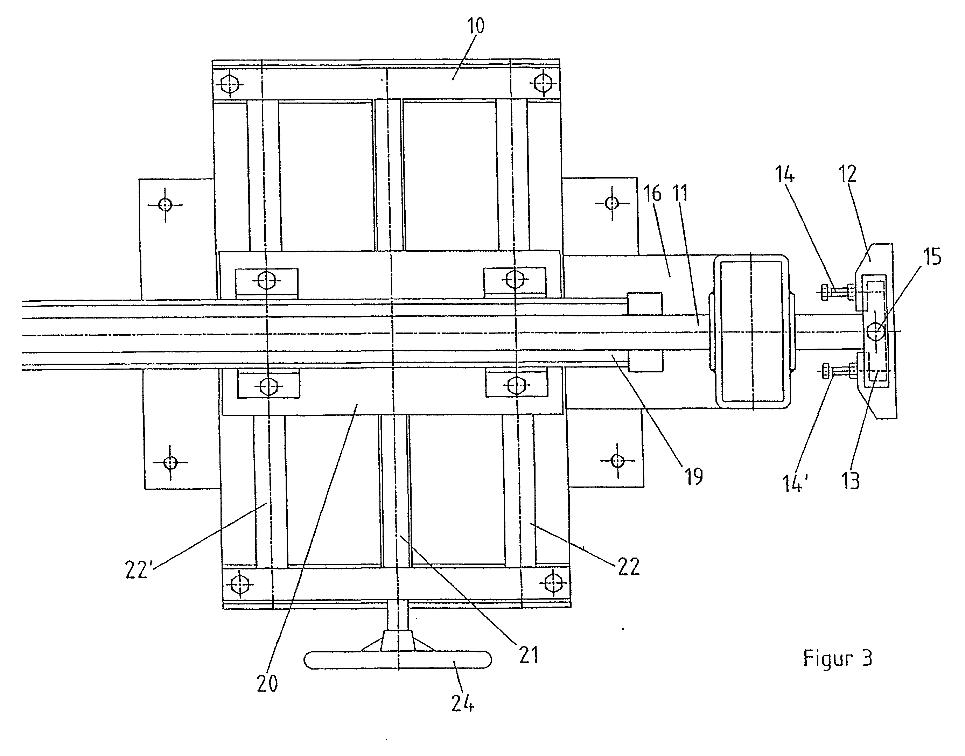

Gemäß Figur 3 weist die Fühlerplatte 12 eine U-förmige Ausnehmung auf, in die ein am vorderen Ende der Schiebestange 11 befestigtes Schild 13 eingreift. Entlang dieses Schildes 13 ist die Fühlerplatte 12 höhenverstellbar mittels zweier Schrauben 14, 14' befestigt.

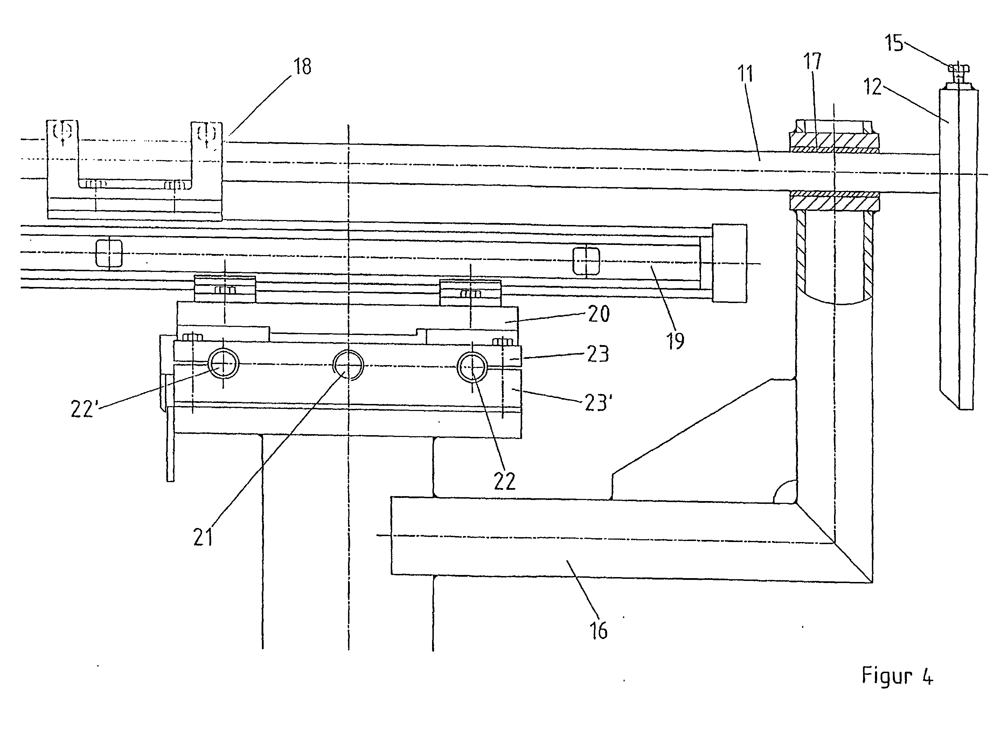

Figur 4 zeigt eine Ansicht in Richtung Z in Figur 2. Dieser Darstellung ist zu entnehmen, daß am Rahmengestell 10 ein L-förmiger Arm 16 befestigt ist, der am freien Ende mit einer Führungsbüchse 17 versehen ist, in der die Schiebestange 11 geführt ist. Fest verbunden mit der Schiebestange 11 ist ein Bügel 18, der das Verschiebeelement des unter der Schiebestange 11 angeordneten kolbenstangenlosen Zylinders 19 ist. Dieser Zylinder 19 ist an einem Halteblech 20 befestigt, das wiederum mit einer zweigeteilten Führungsplatte 23,23' verbunden ist. Die Führungsplatten 23,23' sind mittels einer Gewindespindel 21 (Figur 3) und zweier Führungsstangen 22,22' quer verschiebbar. Bewegt wird die Gewindespindel 21 über ein in der Gewindespindel 21 befestigtes Handrad 24.

Figur 2 zeigt eine Ansicht in Richtung X in Figur 1. In dieser Darstellung ist der Zulauf des zu sammelnden Gutes 25 erkennbar. Ein Pfeil 26 kennzeichnet die Zulaufrichtung. Am Anschlag 27 der Sammelmulde 7 kommt das zu sammelnde Gut zur Anlage. Gegenüber der festen Zulaufschräge 27 ist die Auflage 28 der Sammelmulde 7 hebund senkbar, wie durch den Doppelpfeil 29 gekennzeichnet. Alternierend zum Takt des Zulaufes des zu sammelnden Gutes 25 wird der Zylinder 19 aktiviert und die Fühlerplatte 12 über die Bündiglinie 30 (Figur 1) hinweg nach vom geschoben.

Solange kein Gut in diesem Bereich liegt, bleibt die Auflage 28 in der vorgegebenen Stellung stehen. Stößt die Fühlerplatte 12 erstmalig gegen die Stirnseite eines Gutes 25, wird ein Kontakt ausgelöst und die Auflage 28 um eine Lagenhöhe abgesenkt. Danach erfolgt, wie zuvor beschrieben, die weitere Befüllung der Sammelmulde 7. Nach Entnahme des gesamten gesammelten Gutes 25 wird die Auflage 28 wieder in die Ausgangsstellung zurückbewegt. Um die Position der Fühlerplatte 12 der Quererstreckung des zu sammelnden Gutes 25 anpassen zu können, ist die zuvor beschriebene Querverschiebung erforderlich. Eine außen angeordnete Skala 31 sowie ein Zeiger 32 erleichtern die Einstellung passend zum Durchmesser des zu sammelnden Gutes 25.

## Patentansprüche

1. Vorrichtung zur Überwachung der Befüllung von Sammelmulden mit konstanter Muldenbreite, bei denen langgestrecktes rollfähiges Gut, insbesondere Stangen oder Rohre in übereinandergeschichteten Lagen lärmarm gesammelt wird, bestehend aus einer vertikal verstellbaren Unterlage, welche beim Zuladen jeder weiteren Lage um die vertikale Lagenhöhe heb- oder senkbar ist und einem über der Unterlage vorstehenden Fühler, wobei mehrere im Abstand voneinander fluchtend angeordnete Unterlagen zusammen eine Mulde bilden und die Unterlage entsprechend dem Rollwiderstand des Gutes in Quertransportrichtung auf eine bestimmte Neigung einstellbar ist,
**dadurch gekennzeichnet,**
**dass** der Fühler gegenüber der Stirnseite des als letztes einzulagernden Stückes einer Lage angeordnet ist und nach jedem Einlagerungsvorgang in Längsrichtung dieses Stückes ggf. über die Bündiglinie (30) des bereits gesammelten Gutes hinweg vor und zurück bewegbar ist und das Abstoßen am letzten Stück der Lage als Signal für das Anheben der verstellbaren (29) Unterlage (28) dient.

2. Vorrichtung nach Anspruch 1,
**dadurch gekennzeichnet,**
**dass** der Fühler als Fühlerplatte (12) ausgebildet ist und die daran befestigte Schiebestange (11) mit einem kolbenstangenlosen Zylinder (19) verbunden ist.

3. Vorrichtung nach Anspruch 2,
**dadurch gekennzeichnet,**
**daß** die Fühlerplatte (12) auf der dem zu sammelnden Gut (25) zugewandten Seite in Richtung des Hebens und Senkens des Gutes (25) - also oben und unten - eine Abschrägung aufweist.

4. Vorrichtung nach den Ansprüchen 1 bis 3,
**dadurch gekennzeichnet,**
**dass** der Zylinder (19) auf einem Halteblech (20) befestigt ist und das Halteblech (20) zusammen mit einem Führungselement (22,22') quer zur Muldenlängsrichtung einstellbar ist.

5. Vorrichtung nach Anspruch 4,
**dadurch gekennzeichnet,**
**dass** die Einstellung auf einer Skala (31) anzeigbar ist.

6. Vorrichtung nach Anspruch 1,
**dadurch gekennzeichnet,**
**dass** der Antrieb einen Preßluftanschluß aufweist.

## Claims

1. A device for monitoring the filling of collecting troughs of constant trough width, in which elongate rollable stock, in particular rods or tubes, is collected in superposed layers under low-noise conditions, consisting of a vertically adjustable support surface which can be raised or lowered by the vertical layer height upon loading each additional layer, and a sensor projecting above the support surface, with a plurality of support surfaces arranged flush and spaced apart from each other together forming a trough and the support surface corresponding to the rolling resistance of the stock in the transverse transport direction is adjustable to a given inclination,
**characterised in that**
the sensor is arranged opposite the end face of that piece of a layer which is last to be stored and after each storage operation can be moved back and forth in the longitudinal direction of this piece optionally across the flush line (30) of the already-collected stock, and the butting against the last piece of the layer serves as a signal for lifting the adjustable (29) support surface (28).

2. A device according to Claim 1, **characterised in that** the sensor is in the form of a sensor plate (12) and the slide rod (11) fastened thereto is connected to a piston-rod-less cylinder (19).

3. A device according to Claim 2, **characterised in that** the sensor plate (12) on the side facing the stock (25) to be collected has a chamfer in the direction of raising and lowering of the stock (25), i.e. top and bottom.

4. A device according to Claims 1 to 3, **characterised in that** the cylinder (19) is fastened to a holding plate (20) and the holding plate (20) together with a guide element (22, 22') is adjustable transversely to the longitudinal direction of the trough.

5. A device according to Claim 4, **characterised in that** the adjustment can be displayed on a scale (31).

6. A device according to Claim 1, **characterised in that** the drive has a compressed-air connection.

## Revendications

1. Dispositif pour surveiller le remplissage d'augets collecteurs à largeur d'auget constante, avec lesquels des produits allongés capables de rouler, en particulier des barres ou des tubes, sont collectés à faible niveau de bruit en couches disposées les unes sur les autres, comprenant une base déplaçable verticalement qui peut être levée ou abaissée verticalement sur la hauteur des couches lors du chargement de chaque couche successive et un palpeur disposé en saillie au-dessus de ladite base, plusieurs bases disposées en alignement espacées les unes des autres formant ensemble un auget et la base pouvant être ajustée selon une inclinaison déterminée en fonction de la résistance de roulement des produits dans le sens de transport transversal, **caractérisé en ce que** le palpeur est disposé en face de la face avant du dernier produit d'une couche à déposer et peut être déplacé vers l'avant et vers l'arrière après chaque opération de dépose dans le sens longitudinal de ce produit, éventuellement au-delà de la ligne affleurée (30) des produits déjà collectés, et la poussée contre le dernier produit de la couche sert de signal pour la levée de la base (28) déplaçable (29).

2. Dispositif selon la revendication 1, **caractérisé en ce que** le palpeur est conformé en plaque à palpeur (12) et **en ce que** la tige coulissante (11) fixée dessus est reliée à un vérin sans tige de piston (19).

3. Dispositif selon la revendication 2, **caractérisé en ce que** la plaque à palpeur (12) comporte, du côté tourné vers le produit à collecter (25), un chanfrein dans le sens de la montée et de la descente des produits (25) - c'est-à-dire en haut et en bas.

4. Dispositif selon les revendications 1 à 3, **caractérisé en ce que** le vérin (19) est fixé sur une tôle de support (20) et **en ce que** la tôle (20), avec un élément de guidage (22, 22'), est réglable transversalement par rapport au sens longitudinal de l'auget.

5. Dispositif selon la revendication 4, **caractérisé en ce que** le réglage peut être affiché sur une échelle (31).

6. Dispositif selon la revendication 1, **caractérisé en ce que** l'entraînement comporte un raccordement d'air comprimé.
